# EUROPÄISCHE PATENTSCHRIFT

(11) **EP 2 718 399 B1**
(45) Veröffentlichungstag und Bekanntmachung des Hinweises auf die Patenterteilung: **10.08.2016**
(21) Anmeldenummer: 12726410.9
(22) Anmeldetag: 04.06.2012
(51) Int. Cl.: C09K 21/12, C08G 59/14

(54) **HERSTELLUNG VON GEHÄRTETEN EPOXIDHARZEN MIT FLAMMHEMMENDEN PHOSPHONATEN**
PRODUCTION OF HARDENED EPOXIDE RESIN WITH FLAME-RETARDANT PHOSPHONATES
FABRICATION DE RÉSINES ÉPOXY DURCIES À L'AIDE DE PHOSPHONATES IGNIFUGES

(30) Priorität: 09.06.2011 EP 11169231
(43) Veröffentlichungstag der Anmeldung: 16.04.2014
(73) Patentinhaber: BASF SE, 67056 Ludwigshafen am Rhein (DE)
(72) Erfinder: HENNINGSEN, Michael, 67227 Frankenthal (DE); KAFFEE, Achim, 64653 Lorsch (DE); STUMBE, Jean-Francois, F-67200 Strasbourg (FR); DÖRING, Manfred, 76744 Wörth (DE); SCHMIDT, Alexander, 45138 Essen (DE); ZANG, Lin, 76133 Karlsruhe (DE); ALTSTÄDT, Volker, 95448 Bayreuth (DE); KRÄMER, Johannes, 68723 Oftersheim (DE)
(74) Vertreter: BASF IP Association
(86) Internationale Anmeldenummer: PCT/EP2012/060474
(87) Internationale Veröffentlichungsnummer: WO 2012/168174

(56) Entgegenhaltungen:
- EP-B1- 0 923 587
- DE-A1- 2 443 074
- DE-A1- 19 613 066
- GB-A- 1 002 326
- US-A- 4 111 909
- US-A- 4 632 973

## Beschreibung

Die vorliegende Anmeldung schließt durch Verweis die am 09. Juni 2011 eingereichte vorläufige US-Anmeldung Nr. 61/494,899 ein.

Die vorliegende Erfindung betrifft Verfahren zur Herstellung von gehärteten Epoxidharzen mit Phosphonat der Formel I in einem Anteil von insgesamt maximal 2,5 Gew.-% Phosphor und mindestens 0,2 Gew-% Phosphor bezogen auf die Gesamtmischung, die eine im Vergleich zu den entsprechenden gehärteten Epoxidharzen ohne diesen Phosphonatzusatz erhöhte Glasübergangstemperatur aufweisen oder durch thermische Nachbehandlung ausbilden können. Dabei wird die härtbare Zusammensetzung, welche eine Epoxidverbindung, einen Aminogruppen enthaltenden Härter (Aminohärter) und ein Phosphonat der Formel I beinhaltet, gehärtet und anschließend gegebenenfalls getempert.
Ein weiterer Gegenstand der Erfindung ist die für das erfindungsgemäße Verfahren verwendete härtbare Zusammensetzung umfassend eine oder mehrere Epoxidverbindungen, eine oder mehrere Aminohärter und einen oder mehrere Phosphonate der Formel I in einem Anteil von insgesamt maximal 2,5 Gew.-% Phosphor und mindestens 0,2 Gew-% Phosphor bezogen auf die gesamte Zusammensetzung.
Gegenstand der Erfindung ist ebenfalls gehärtetes Epoxidharz, das herstellbar ist nach dem erfindungsgemäßen Verfahren, ausgehend von den Komponenten Epoxidverbindung, Aminohärter und Phosphonat der Formel I in einem Anteil von insgesamt maximal 2,5 Gew.-% Phosphor und mindestens 0,2 Gew-% Phosphor bezogen auf die gesamte Zusammensetzung, wobei das gehärtete Epoxidharz eine im Vergleich zu den entsprechenden gehärteten Epoxidharzen ohne diesen Phosphonatzusatz erhöhte Glasübergangstemperatur aufweist oder durch thermische Nachbehandlung ausbilden kann.

Gegenstand der Erfindung ist auch ein aus dem erfindungsgemäß gehärteten Epoxidharz hergestellter Formkörper.

Viele polymere Werkstoffe wie beispielsweise Epoxidharze sind entzündbar und können im Brandfall eine starke Hitzeentwicklung bzw. die Freisetzung toxischer Rauchgase verursachen. Diesem Nachteil kann durch Zugabe von Flammschutzmitteln entgegengewirkt werden, die bei zahlreichen Anwendungen unumgänglich und/oder gesetzlich vorgeschrieben ist.

Aufgaben der Flammschutzmittel sind die Verringerung der Entflammbarkeit der Polymere (Realisierung selbstverlöschender Materialien) und die Reduzierung der Wärmefreisetzung während eines möglichen Brandes. Wirkprinzipien der Flammschutzmittel sind unter anderem verstärkte Carbonifizierung im Brandfall, die dann zur Verringerung der Menge des brennbaren Materials und zur Bildung einer schützenden Oberflächenschicht (Festphasenmechanismus) führt, sowie Intumeszenz, d.h. die Bildung einer voluminösen Isolationsschicht, die durch zusätzliche Freisetzung von Gasen induziert wird (Festphasenmechanismus), als auch die Freisetzung radikalischer Spezies, die in der Gasphase reaktive Radikale abfangen und somit den Verbrennungsprozess hemmen (Gasphasenmechanismus).

Phosphorhaltige Flammschutzmittel erlangen zunehmende Bedeutung als ökologisch unbedenkliche Flammschutzmittel. Für phosphorhaltige Flammschutzmittel wurden sowohl Gasphasen- als auch Festphasenmechanismen für die flammhemmende Wirkung nachgewiesen, was ein breites Einsatzspektrum generiert. Für eine optimale Flammschutzwirkung werden in der Regel die phosphorhaltigen Verbindungen in einem Anteil von insgesamt mindestens etwa 3 Gewichtsprozent Phosphor bezogen auf die Gesamtmischung eingesetzt.

Ester der Phosphonsäure (Phosphonate) werden bereits seit über 40 Jahren für den Flammschutz von Textilien eingesetzt (US 3,721,523). Zu dieser Zeit wurden auch bereits halogenierte Phosphonate für den Flammschutz von Epoxidharzen und Polyurethanen patentiert (US 3,372,298, US 3,349,150, US 3,636,061, DE 2443074). Des Weiteren wurden Phosphoramindomethylphosphonate als Flammschutz für verschiedene Polymere wie Polypropylen, Polystyrol, Nylon, Polyethylentherephthalat und Epoxidharze beschrieben (US 4,053,450). Ein gängiges Flammschutzmittel aus der Gruppe der Phosphonate ist das Dimethylmethylphosphonat, das auch als Additiv für Epoxidharze beschrieben ist (J Appl Polm Sci 2002, 84:302). GB 1002326 offenbart Zusammensetzungen mit Epoxidverbindungen und Dialkylphosphit als flammhemmende Komponente. EP 923587 wiederum offenbart flammhemmende härtbare Mischungen aus cyclischem Phosphonat und einer Epoxidverbindung. DE 19613066 beschreibt phosphormodifizierte Epoxidharze, die mit carboxylhaltigen Phosphin- oder Phosphonsäuren umgesetzt sind.

Der Zusatz solcher Phosphonate als Flammschutzmittel zu Epoxiden gemäß dem Stand der Technik wirkt sich jedoch in der Regel nachteilig auf die Glasübergangstemperatur (T_{g}) aus - die Glasübergangstemperatur wird durch einen solchen Zusatz meist herabgesetzt oder bleibt bestenfalls unverändert. Eine hohe Glasübergangstemperatur ist jedoch wichtig für die Realisierung von Formkörpern bzw. Bauteilen, die auch bei erhöhter Temperaturbelastung noch ihre Stabilität bewahren.

US 4,111,909 beschreibt die Zugabe von Phosphonaten zu Mischungen aus Epoxidverbindungen und Dicyandiamide-Härter zur Modulierung der Härtungszeit, eine Beeinflussung der Glasübergangstemperatur ist jedoch nicht nahe gelegt.

Zusätze zu Epoxidharzen erniedrigen zumeist die Glasübergangstemperatur.
Reaktive Zusätze, die mit den Epoxidgruppen der Epoxidverbindungen reagieren, verringern deren Anzahl und bewirken so eine geringere Vernetzung und dadurch eine geringere Glasübergangstemperatur. Additive Zusätze, die nicht mit den Epoxidgruppen der Epoxidverbindungen reagieren, wirken in der Regel als Weichmacher auf das Netzwerk. Je größer dieser Effekt ist desto geringer ist die resultierende Glasübergangstemperatur. Eine Erhöhung der Glasübergangstemperatur kann durch zusätzliche Nachvernetzung erreicht werden (Davis und Rawlins, 2009 SAMPE Fall Technical Conference & Exhibition; Wichita, KS; Oct 19-22, 2009). Bekannte Agenzien für eine solche Nachvernetzung sind blockierte Isocyanat-Derivate wie Uretdione oder Isocyanurate.

Beschrieben ist ebenfalls die Verwendung von Phosphonaten, die mit Epoxidgruppen oder Aminogruppen funktionalisiert sind, als Co-Monomerfür Epoxidharze (US 6,201,074, US 4,632,973). Die in Gegenwart dieser Co-Monomere gehärteten Epoxidharze weisen jedoch meist trotz langer Härte- und Temperzeit vergleichsweise niedrige Glasübergangstemperaturen von üblicherweise 100 bis 135°C auf. Darüber hinaus ist die aufwendige Synthese dieser Co-Monomere von Nachteil.

Wünschenswert wären gehärtete Epoxidharze aus Epoxidharz-Mischungen mit Phosphonaten als Flammschutzmittel, bei denen gleichzeitig eine Erhöhung der Glasübergangstemperatur realisiert werden kann.

Als der Erfindung zugrunde liegende Aufgabe kann daher erachtet werden die Bereitstellung von Verfahren zur Herstellung von gehärteten Epoxidharzen aus Epoxidharz-Formulierungen, die Phosphonate beinhalten und gleichzeitig vergleichsweise hohe Glasübergangstemperaturen aufweisen oder ausbilden können, sowie die Bereitstellung entsprechender Epoxidharz-Formulierungen und entsprechender gehärteter Epoxidharze.

Entsprechend betrifft die vorliegende Erfindung Epoxidharz-Formulierungen (härtbare Zusammensetzungen) umfassend ein oder mehre Epoxidverbindungen, ein oder mehrere Aminohärter mit mindestens einer primären oder mindestens zwei sekundären Aminogruppen und ein oder mehrere Phosphonate der Formel I 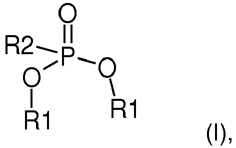
wobei R1 unabhängig von einander Alkyl- oder Aryl-Gruppen oder substituierte Aryl-, Alkaryl-, oder Alkenyl-Gruppen, vorzugsweise Alkyl-Gruppen, sind,
und wobei R2 ein H-Atom ist,
und wobei der Anteil der Phosphonate der Formel I 2,5 Gew.-% Phosphor bezogen auf die gesamte Zusammensetzung nicht überschreitet und mindestens 0,2 Gew-% Phosphor bezogen auf die gesamte Zusammensetzung beträgt,
und wobei die Alkyl-Gruppen1 bis 20 C-Atome besitzen und keine Substituenten mit Heteroatomen aufweisen.

Bevorzugt sind Phosphonate der Formel I, bei denen R1 unabhängig von einander Alkyl-Gruppen mit 1 bis 5 C-Atomen, insbesondere 1 bis 3 C-Atomen ohne Heteroatome sind. In einer Variante bilden die beiden R1-Gruppen zusammen einen gemeinsamen Alkylen-verbrückenden Rest, wobei dieser Rest bevorzugt 2 bis 10 C-Atome, insbesondere 2 bis 6 C-Atome und keine Heteroatome besitzt. Bevorzugt sind Phosphonate der Formel I, bei denen R1 unabhängig von einander Alkyl-Gruppen mit 1 bis 5 C-Atomen, insbesondere 1 bis 3 C-Atomen ohne Heteroatome sind, und die beiden R1-Gruppen keinen gemeinsamen Alkylen-verbrückten Rest ausbilden.
Geeignete Phosphonate der Formel I sind beispielsweise Dimethylphosphit (DMP, Formel II), Diethylphosphit (DEP, Formel III) und 5,5-Dimethyl-[1,3,2]dioxaphosphinane 2-oxide (DDPO, Formel IV).

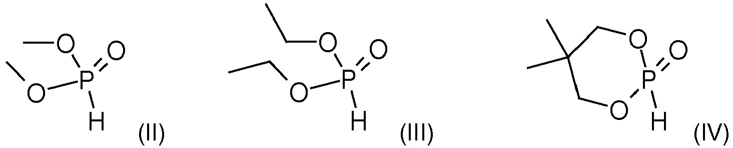

Alkyl-Gruppen im Sinne der Erfindung besitzen 1 bis 20 C-Atome. Sie können linear, verzweigt oder cyclisch sein. Sie weisen keine Substituenten mit Heteroatomen auf. Heteroatome sind alle Atome außer C- und H-Atome.

Aryl-Gruppen im Sinne der Erfindung besitzen 5 bis 20 C-Atome. Bevorzugt weisen sie keine Substituenten mit Heteroatomen auf. Heteroatome sind alle Atome außer C- und H-Atome.

Härter-freie prä-Formulierungen umfassend ein oder mehrere Epoxidverbindungen und ein oder mehrere Phosphonate der Formel I besitzen eine gute Lagerstabilität. Der Aminohärter kann dann vor dem Härtungsschritt mit der prä-Formulierung in Kontakt gebracht und vermischt werden.

Für die Polyadditionsreaktion geeignete Aminohärter besitzen mindestens zwei sekundäre oder mindestens eine primäre Aminogruppe. Durch die Verknüpfung der Aminogruppen des Aminohärters mit den Epoxidgruppen der Epoxidverbindung bilden sich Oligomere aus den Aminohärtern und den Epoxidverbindungen. Aminohärter werden daher in der Regel im stöchiometrischen Verhältnis zu den Epoxidverbindungen eingesetzt. Wenn der Aminohärter beispielsweise zwei primäre Aminogruppen hat, also mit bis zu vier Epoxidgruppen koppeln kann, können vernetzte Strukturen entstehen.

Die Aminohärter der erfindungsgemäßen härtbaren Zusammensetzung besitzen mindestens eine primäre Aminogruppe oder zwei sekundäre Aminogruppen. Ausgehend von Epoxidverbindungen mit mindestens zwei Epoxidgruppen kann mit einer Aminoverbindung mit mindestens zwei Aminofunktionen eine Härtung durch eine Polyadditionsreaktion (Kettenverlängerung) erfolgen. Dabei entspricht die Funktionalität einer Aminoverbindung ihrer Anzahl an NH-Bindungen. Eine primäre Aminogruppe hat somit eine Funktionalität von 2, während eine sekundäre Aminogruppe eine Funktionalität von 1 hat. Durch die Verknüpfung der Aminogruppen des Aminohärters mit den Epoxidgruppen der Epoxidverbindung bilden sich Oligomere aus dem Aminohärter und der Epoxidverbindung, und wobei die Epoxidgruppen zu freien OH-Gruppen umgesetzt werden. Bevorzugt werden Aminohärter verwendet, mit einer Funktionalität von mindestens 3 (beispielsweise mindestens 3 sekundäre Aminogruppen oder mindestens eine primäre und eine sekundäre Aminogruppe), insbesondere solche mit zwei primären Aminogruppen (Funktionalität von 4).

Bevorzugte Aminohärter sind Dimethyldicykan (DMDC), Dicyandiamid (DICY), Isophorondiamin (IPDA), Diethylentriamin (DETA), Triethylentetramin (TETA), Bis(p-aminocyclohexyl)methan (PACM), Methylendianilin (bspw. 4,4'-Methylendianilin), Polyetheramin D230, Diaminodiphenylmethan (DDM), Diaminodiphenylsulfon (DDS), 2,4-Toluoldiamin, 2,6-Toluoldiamin, 2,4-Diamino-1-methylcyclohexan, 2,6-Diamino-1-methylcyclohexan, 2,4-Diamino-3,5-diethyltoluol und 2,6-Diamino-3,5-diethyltoluol sowie Gemisch davon. Besonders bevorzugte Aminohärter für die erfindungsgemäße härtbare Zusammensetzung sind Dimethyldicykan (DMDC), Dicyandiamid (DICY), Isophorondiamin (IPDA) und Methylendianilin (bspw. 4,4'-Methylendianilin).

Vorzugsweise werden bei der erfindungsgemäßen härtbaren Zusammensetzung Epoxidverbindung und Aminohärter in einem bezogen auf die Epoxid- bzw. die Aminofunktionalität in etwa stöchiometrischen Verhältnis eingesetzt. Besonders geeignete Verhältnisse von Epoxidgruppen zu Aminofunktionalität sind beispielsweise 1:0,8 bis 1:1,2.

Der Anteil der Phosphonate der Formel I an der erfindungsgemäßen härtbaren Zusammensetzung (%P: Atom-% Phosphor, Gewichtsprozent Phosphor bezogen auf die gesamte Zusammensetzung) beträgt mindestens 0,2 %P. Unterhalb eines solchen Anteils ist die erfindungsgemäße Verbesserung des Flammschutzes und der Glasübergangstemperatur gering. Bevorzugt enthalten die erfindungsgemäßen Zusammensetzungen mindestens 0,5 %P. Bevorzugt wird erfindungsgemäß ein Anteil von 2 %P, bevorzugt 1,5 %P nicht überschritten. Ein zu hohen Anteil an Phosphonat der Formel I kann bei Vernetzung eine erhöhte Versprödung des gehärteten Materials bewirken, oder bei Nicht-Vernetzung wie ein Weichmacher wirken und die Glasübergangstemperatur des gehärteten Materials wieder reduzieren.

Epoxidverbindungen gemäß dieser Erfindung besitzen 2 bis 10, bevorzugt 2 bis 6, ganz besonders bevorzugt 2 bis 4 und insbesondere 2 Epoxidgruppen. Bei den Epoxidgruppen handelt es sich insbesondere um Glycidylethergruppen, wie sie bei der Umsetzung von Alkoholgruppen mit Epichlorhydrin entstehen. Bei den Epoxidverbindungen kann es sich um niedermolekulare Verbindungen, welche im Allgemeinen ein mittleres Molgewicht (Mn) kleiner 1.000 g/mol haben oder um höhermolekulare Verbindungen (Polymere) handeln. Solche polymeren Epoxidverbindungen haben bevorzugt einen Oligomerisierungsgrad von 2 bis 25, besonders bevorzugt von 2 bis 10 Einheiten. Es kann sich um aliphatische, auch cycloaliphatische Verbindungen oder um Verbindungen mit aromatischen Gruppen handeln. Insbesondere handelt es sich bei den Epoxidverbindungen um Verbindungen mit zwei aromatischen oder aliphatischen 6-Ringen oder deren Oligomere. Technisch von Bedeutung sind Epoxidverbindungen, die durch Umsetzung des Epichlorhydrins mit Verbindungen, welche mindestens zwei reaktive H-Atome haben, insbesondere mit Polyolen, erhältlich sind. Von besonderer Bedeutung sind Epoxidverbindungen, die durch Umsetzung des Epichlorhydrins mit Verbindungen, welche mindestens zwei, vorzugsweise zwei Hydroxylgruppen und zwei aromatische oder aliphatische 6-Ringe enthalten, erhältlich sind. Als derartige Verbindungen seien insbesondere Bisphenol A und Bisphenol F, sowie hydriertes Bisphenol A und Bisphenol F genannt. Als Epoxidverbindungen gemäß dieser Erfindung werden üblicherweise verwendet Bisphenol-A-diglycidylether (DGEBA). Geeignete Epoxidverbindungen gemäß dieser Erfindung sind auch Tetraglycidyl-Methylendianilin (TGMDA) und Triglycidylaminophenol oder Gemische davon. In Betracht kommen auch Umsetzungsprodukte des Epichlorhydrins mit anderen Phenolen, z.B. mit Kresolen oder Phenolaldehyd-adukten, wie Phenolformaldehydharzen, insbesondere Novolaken. Geeignet sind auch Epoxidverbindungen, welche sich nicht vom Epichlorhydrin ableiten. In Betracht kommen z.B. Epoxidverbindungen, welche Epoxidgruppen durch Umsetzung mit Glycidyl(meth)acrylat) enthalten. Vorzugsweise werden erfindungsgemäß Epoxidverbindungen oder Gemische davon eingesetzt, die bei Raumtemperatur (25°C) flüssig sind.

Die erfindungsgemäßen härtbaren Zusammensetzungen umfassen sowohl bei Raumtemperatur (25°C) flüssige als auch bei Raumtemperatur (25°C) feste Zusammensetzungen. Entsprechend der gewünschten Verwendung können die Zusammensetzungen flüssige oder feste Komponenten beinhalten. Auch Mischungen aus festen und flüssigen Komponenten können beispielsweise als Lösungen oder Dispersionen zum Einsatz kommen. Für die Verwendung als Pulverlacke werden beispielsweise Mischungen aus festen Komponenten genutzt. Mischungen aus flüssigen Komponenten sind insbesondere von Bedeutung für die Herstellung von faserverstärkten Verbundwerkstoffen. Der Aggregatzustand des Epoxidharzes lässt insbesondere durch den Oligomerisierungsgrad einstellen. Bevorzugt ist die härtbare Zusammensetzung flüssig.

Die erfindungsgemäße härtbare Zusammensetzung kann auch einen Beschleuniger für die Härtung umfassen. Geeignete Härtungsbeschleuniger sind beispielsweise Imidazol oder ImidazolDerivate oder Harnstoffderivate (Urone), wie beispielsweise 1,1-Dimethyl-3-phenylharnstoff (Fenuron). Auch die Verwendung von tertiären Aminen wie beispielsweise Triethanolamin, Benzyldimethylamin, 2,4,6-Tris(dimethylaminomethyl)phenol und Tetramethylguanidin als Härtungsbeschleuniger ist beschrieben (US 4,948,700). Bekanntermaßen kann beispielsweise die Härtung von Epoxidharzen mit DICY durch Zugabe von Fenuron beschleunigt werden.

Erfindungsgemäßes härtbare Zusammensetzungen sind beispielsweise die Kombination umfassend DGEBA, DMDC und ein Phosphonat ausgewählt aus der Gruppe bestehend aus DMP, DEP und DDPO, die Kombination umfassend DGEBA, DICY und ein Phosphonat ausgewählt aus der Gruppe bestehend aus DMP, DEP und DDPO, die Kombination umfassend DGEBA, DICY, Fenuron und ein Phosphonat ausgewählt aus der Gruppe bestehend aus DMP, DEP und DDPO, die Kombination umfassend DGEBA, IPDA und ein Phosphonat ausgewählt aus der Gruppe bestehend aus DMP, DEP und DDPO, sowie die Kombination umfassend RTM6 (eine vorformulierte Harz-Härter-Mischung) und ein Phosphonat ausgewählt aus der Gruppe bestehend aus DMP und DEP. Entsprechende prä-Formulierungen sind beispielsweise die Aminohärter-freien Kombination umfassend DGEBA und ein Phosphonat ausgewählt aus der Gruppe bestehend aus DMP, DEP und DDPO, die Kombination umfassend DGEBA, Fenuron und ein Phosphonat ausgewählt aus der Gruppe bestehend aus DMP, DEP und DDPO, die Kombination umfassend Triglycidylaminophenol und ein Phosphonat ausgewählt aus der Gruppe bestehend aus DMP und DEP sowie die Kombination umfassend Tetraglycidyl-Methylendianilin und ein Phosphonat ausgewählt aus der Gruppe bestehend aus DMP und DEP.

In einer Variante der erfindungsgemäßen härtbaren Zusammensetzung enthält diese neben den erfindungsgemäßen Phosphonaten der Formel I keine weiteren Phosphorverbindungen, oder diese maximal in einem Anteil von 0,5 %P, bzw. maximal in einem Anteil von 0,1 %P.

In einer Variante der erfindungsgemäßen härtbaren Zusammensetzung enthält diese neben den erfindungsgemäßen Aminohärtern keinen weiteren Härter oder diese maximal in einem Anteil von 1 Gew.-%.

Ein weiterer Gegenstand der Erfindung ist ein Verfahren zur Herstellung von gehärteten Epoxidharzen aus der erfindungsgemäßen härtbaren Zusammensetzung mit Phosphonat-Zusatz, die eine im Vergleich zu dem entsprechenden Epoxidharzen ohne diesen Phosphonat-Zusatz erhöhte Glasübergangstemperatur aufweisen oder durch thermische Nachbehandlung ausbilden. Die erfindungsgemäß erhältlichen gehärteten Epoxidharze weisen eine erhöhte Glasübergangstemperatur auf gegenüber den entsprechenden gehärteten Epoxidharzen ohne den Phosphonat-Zusatz oder sie können eine solche erhöhte Glasübergangstemperatur durch eine thermische Nachbehandlung ausbilden. Bevorzug beträgt diese Erhöhung der Glasübergangstemperatur mindestens 10°C, insbesondere mindestens 20°C.

Bei dem erfindungsgemäßen Verfahren zur Herstellung solcher gehärteter Epoxidharze, die eine vergleichsweise hohe Glasübergangstemperatur aufweisen oder durch thermische Nachbehandlung ausbilden können, werden die Komponenten (Epoxidverbindung, Aminohärter, Phosphonat der Formel I und gegebenenfalls weitere Komponenten wie beispielsweise Beschleuniger) in beliebiger Reihenfolge miteinander in Kontakt gebracht und vermischt, danach gehärtet und vorzugsweise einer thermischen Nachbehandlung ausgesetzt, beispielsweise im Rahmen der Härtung oder im Rahmen einer optionalen nachgeschalteten Temperung.

Die Härtung kann bei Normaldruck und bei Temperaturen kleiner 250°C, insbesondere bei Temperaturen kleiner 210°C, vorzugsweise bei Temperaturen kleiner 185°C erfolgen, insbesondere in einem Temperaturbereich von 40 bis 210°C, vorzugsweise in einem Temperaturbereich von 40 bis 185°C.

Die Härtung erfolgt üblicherweise in einem Werkzeug bis Formstabilität erreicht ist und das Werkstück aus dem Werkzeug entnommen werden kann. Der sich anschließende Prozess zum Abbau von Eigenspannungen des Werkstücks und/oder zum Vervollständigen der Vernetzung des gehärteten Epoxidharzes wird Tempern genannt. Grundsätzlich ist es auch möglich, den Temperprozess auch vor Entnahme des Werkstückes aus dem Werkzeug durchzuführen, etwa zur Vervollständigung der Vernetzung. Der Temperprozess findet üblicherweise bei Temperaturen an der Grenze der Formsteifigkeit statt (Menges et. al., "Werkstoffkunde Kunststoffe" (2002), Hanser-Verlag, 5. Auflage, S. 136). Üblicherweise wird bei Temperaturen von 120 bis 220°C, bevorzugt bei Temperaturen von 150 bis 220°C getempert. Üblicherweise wird das gehärtete Werkstück für einen Zeitraum von 30 bis 240 min den Temperbedingungen ausgesetzt. Abhängig von den Abmessungen des Werkstücks, können auch längerer Temperzeiten angebracht sein.

Die thermische Nachbehandlung des erfindungsgemäßen gehärteten Epoxidharzes ist essentiell für die Ausprägung der erhöhten Glasübergangstemperatur. Sie erfolgt vorzugsweise bei einer Temperatur oberhalb der Glasübergangstemperatur des entsprechenden gehärteten Epoxidharzes ohne Zusatz von Phosphonat der Formel I. Üblicherweise erfolgt die thermische Nachbehandlung bei einer Temperatur von 150 bis 250°C, insbesondere bei einer Temperatur von 180 bis 220°C, vorzugsweise bei einer Temperatur von 190 bis 220°C und über einen Zeitraum von 30 bis 240 min. Die optimalen Bedingungen für die thermische Nachbehandlung (Temperatur und Zeit) sind individuell unterschiedlich, abhängig von den Komponenten des Epoxid-Systems (Harz, Härter und Zusätze) sowie von der Geometrie des Werkstücks. Durch eine Verlängerung der Nachbehandlungszeit und/oder Erhöhung der Nachbehandlungs-Temperatur lässt sich die Glasübergangstemperatur des gehärteten Epoxidharzes bis auf ein Maximum vergrößern. Bei darüber hinaus gehenden Nachbehandlungsbedingungen kann es zu Abbauprozessen im gehärteten Epoxidharz und in Folge dessen zu einer Verringerung der Glasübergangstemperatur kommen. Die optimalen Bedingungen für die thermische Nachbehandlung werden üblicherweise für das jeweilige Epoxid-System und die jeweilige Anwendung (bspw. Werkstück) in Testreihen ermittelt. Vorzugsweise erfolgt die thermische Nachbehandlung bei Temperaturen im Bereich von 20°C unterhalb bis 40°C oberhalb, insbesondere im Bereich von 10°C unterhalb bis 20°C oberhalb der Glasübergangstemperatur, die zu Beginn der thermischen Nachbehandlung vorliegt. In einer bevorzugten Variante erfolgt die thermische Nachbehandlung in Form einer Temperaturrampe, die der Entwicklung der Glasübergangstemperatur folgt. Die thermische Nachbehandlung wird beendet, spätestens wenn die maximale Glasübergangstemperatur erreicht wurde. Vorzugsweise wird die thermische Nachbehandlung derart ausgeführt, dass das erfindungsgemäße gehärtete Epoxidharz eine um mindestens 10°C, insbesondere von mindesten 20°C erhöhte Glasübergangstemperatur ausbildet, verglichen mit dem entsprechenden gehärteten Epoxidharzes ohne Zusatz des Phosphonats der Formel I unter den ansonsten gleichen Bedingungen. Die thermische Nachbehandlung kann bereits während des Härtungsprozesses, also beispielsweise im formgebenden Werkzeug, erfolgen, wenn die Härtungsbedingungen (Temperatur und Zeit) für die Ausbildung der erfindungsgemäß erhöhten Glasübergangstemperatur ausreichend sind. Bevorzugt erfolgt die thermische Nachbehandlung in Form einer der Härtung nachgeschalteten Temperung, in der Regel außerhalb des formgebenden Werkzeugs. Wenn die thermische Nachbehandlung im Rahmen einer Temperung außerhalb des formgebenden Werkzeugs erfolgt, dann sind vorzugsweise Nachbehandlungsbedingungen zu wählen, bei denen die Formsteifigkeit des Werkstücks erhalten bleibt. Zwar kann durch thermische Nachbehandlung auch bei Epoxid-Systemen ohne den erfindungsgemäßen Zusatz von Phosphonat die Glasübergangstemperatur durch Nachvernetzung in Maßen (bis zur vollständigen Vernetzung) erhöht werden, bei den erfindungsgemäßen Systemen mit Zusatz von Phosphonat der Formel I ist die Erhöhung der Glasübergangstemperatur jedoch deutlich stärker ausgeprägt.

Alternativ kann die thermische Nachbehandlung bei der Herstellung des gehärteten Epoxidharzes auch wegfallen. Das gehärtete Epoxidharz hat dann zwar zunächst keine erhöhte Glasübergangstemperatur, es besitzt aber eine Reserve für die Glasübergangstemperatur. Im Falle eines langsamen Temperaturanstiegs über die ursprüngliche Glasübergangstemperatur hinaus, steigt die Glasübergangstemperatur dann mit an. Das gehärtete Epoxidharz weist somit eine dynamische Stabilitätsreserve auf. Die thermische Nachbehandlung kann in diesem Fall nötigenfalls beim Gebrauch bzw. unter thermischer Belastung des gehärteten Epoxidharzes bzw. des entsprechenden Formkörpers erfolgen.

In einer Ausführungsform des erfindungsgemäßen Verfahrens zur Herstellung solcher gehärteter Epoxidharze wird zunächst eine Härter-freie prä-Formulierung aus Epoxidverbindung und Phosphonat der Formel I hergestellt. Diese prä-Formulierung besitzt dann eine gute Lagerstabilität. Der Aminohärter wird dann vor dem Härtungsschritt mit der prä-Formulierung in Kontakt gebracht und vermischt.

Die Glasübergangstemperatur (T_{g}) kann mittels Dynamisch-Mechanischer Analyse (DMA), beispielsweise gemäß der Norm DIN EN ISO 6721, oder mit einem Differential Kalorimeter (DSC), beispielsweise gemäß der Norm DIN 53765, bestimmt werden. Bei der DMA wird ein rechteckiger Probekörper mit einer erzwungenen Frequenz und vorgegebener Deformation auf Torsion belastet. Dabei wird die Temperatur mit einer definierten Rampe gesteigert und Speicher- und Verlustmodul in festen Zeitintervallen aufgezeichnet. Ersterer stellt die Steifigkeit eines viskoelastischen Werkstoffs dar. Letzterer ist proportional zur im Material dissipierten Arbeit. Die Phasenverschiebung zwischen der dynamischen Spannung und der dynamischen Verformung wird durch den Phasenwinkel δ gekennzeichnet. Die Glasübergangstemperatur kann durch unterschiedliche Methoden bestimmt werden: Als Maximum der tan δ Kurve, als Maximum des Verlustmoduls oder mittels Tangentenmethode am Speichermodul. Bei Bestimmung der Glasübergangstemperatur unter Verwendung eines Differential Kalorimeters wird eine sehr kleine Probenmenge (ca. 10 mg) in einem Aluminiumtiegel mit 10 K/min erwärmt und der Wärmestrom zu einem Referenztiegel gemessen. Dieser Zyklus wird dreimal wiederholt. Die Bestimmung des Glasübergangs erfolgt als Mittelwert aus der zweiten und dritten Messung. Die Auswertung der T_{g}-Stufe der Wärmestromkurve kann über den Wendepunkt, nach der halben Breite oder dem Verfahren der Mittelpunktstemperatur bestimmt werden.

Weiterer Gegenstand der Erfindung ist das gehärtete Epoxidharz, das erhältlich ist durch das erfindungsgemäße Verfahren. Das so erhältliche gehärtete Epoxidharz zeichnet sich aus durch eine verbesserte Flammhemmung und eine erhöhte Glasübergangstemperatur (vorzugsweise eine um mindestens 10°C, insbesondere um mindestens 20°C erhöhte Glasübergangstemperatur) verglichen mit dem entsprechenden Epoxidharz ohne Phosphonat-Zusatz bzw. bei der Herstellung ohne thermische Nachbehandlung durch eine entsprechende Reserve für die Glasübergangstemperatur unter thermischer Beanspruchung in diesem Temperaturbereich.

Gleichzeitig weist ein solches gehärtetes Epoxidharz nach der thermischen Nachbehandlung auch einen höheren Vernetzungsgrad auf als das entsprechende gehärtete Epoxidharz ohne den Phosphonatzusatz.

Der Vernetzungsgrad von (Epoxid-)Harzen kann beispielsweise mittels Fourier-Transformierter Infrarot Spektroskopie (FT-IR) bestimmt werden, in dem die Abnahme des Signals der chemischen Gruppen, die bei der Vernetzung abreagieren, gemessen wird.

Die erfindungsgemäßen härtbaren Zusammensetzungen eignen sich als Beschichtungs- oder Imprägnierungsmittel, als Klebstoff, zur Herstellung von Formkörpern und Verbundwerkstoffen, oder als Gießmassen zur Einbettung, Anbindung oder Verfestigung von Formkörpern. Als Beschichtungsmittel seien z.B. Lacke genannt. Insbesondere können mit den erfindungsgemäßen härtbaren Zusammensetzungen kratzfeste Schutzlacke auf beliebigen Substraten, z.B. aus Metall, Kunststoff oder Holzwerkstoffen erhalten werden. Die härtbaren Zusammensetzungen eignen sich auch als Isolierbeschichtungen in elektronischen Anwendungen, z.B. als Isolierbeschichtung für Drähte und Kabel. Genannt sei auch die Verwendung zur Herstellung von Photoresisten. Sie eignen sich insbesondere auch als Reparaturlack, z.B. auch bei der Ausbesserung von Rohren ohne Demontage der Rohre (cure in place pipe (CIPP) rehabilitation). Sie eignen sich auch zur Versiegelung von Fußböden.

In Verbundwerkstoffen (Komposite) sind unterschiedliche Materialien, z.B. Kunststoffe und Verstärkungsmaterialien (bspw. Glasfasern oder Carbonfasern) miteinander verbunden.

Als Herstellverfahren für Verbundwerkstoffe seien die Härtung von vorimprägnierten Fasern oder Fasergeweben (z.B. Prepregs) nach Lagerung oder aber die Extrusion, Strangziehen (pultrusion), Wickeln (winding) und Infusions- bzw. Injektionsverfahren wie Vakuuminfusion (VARTM), Spritzpressen (resin transfer molding, RTM sowie Nasspressverfahren wie BMC (bulk mould compression) genannt.

Die härtbaren Zusammensetzungen eignen sich z.B. zur Herstellung von vorimprägnierten Fasern, z.B. Prepregs und ihrer weiteren Verarbeitung zu Verbundwerkstoffen. Insbesondere können die Fasern mit der erfindungsgemäßen Zusammensetzung getränkt werden und danach bei einer höheren Temperatur gehärtet werden. Während der Tränkung und gegebenenfalls einer anschließenden Lagerung setzt noch keine oder nur eine geringfügige Härtung ein.

Weitere Gegenstände der Erfindung betreffen daher Formkörper aus dem erfindungsgemäßen gehärteten Epoxidharz, Verbundwerkstoffe, die das erfindungsgemäße gehärtete Epoxidharz enthalten, sowie Fasern, die mit der erfindungsgemäßen härtbaren Zusammensetzung imprägniert sind.

Ein Gegenstand der Erfindung ist auch die Verwendung der erfindungsgemäßen Phosphonate der Formel I als Zusatz zu Mischungen aus Epoxidverbindungen und Aminohärtern zur Erhöhung der Glasübergangstemperatur für das gehärtete Epoxidharz daraus.

Die Erfindung wird nun durch die nachfolgenden, nichtlimitierenden Beispiele näher erläutert.

### Beispiel 1 und Vergleichsbeispiel 1

Gehärtetes Epoxidharz aus DGEBA (Leuna Harze GmbH) und Dimethyldicykan (DMDC, BASF SE) mit DMP (Aldrich) (Beispiel 1) wurde wie folgt hergestellt: 209 g DGEBA, 21,3 g DMP und 69,7 g DMDC wurden bei Raumtemperatur gemischt (Phosphorgehalt bezogen auf die gesamte Mischung: 2 %P). Als Vergleichsbeispiel 1 diente eine entsprechende Formulierung ohne DMP. Die Formulierungen wurden für 20 min bei 90 °C, 30 min bei 150 °C und schließlich 60 min bei 200 °C gehärtet. Anschließend wurden die Proben für 100 min bei 215 °C getempert.

### Beispiel 2 und Vergleichsbeispiel 2

Gehärtetes Epoxidharz aus DGEBA, DICY (Alzchem Trostberg GmbH), Fenuron (Aldrich) mit DMP (Beispiel 2) wurde wie folgt hergestellt: 258 g DGEBA und 21,3 g DMP wurden bei 60°C für 20 min gemischt, anschließend wurden 15,5 g DICY und 5,2 g Fenuron zugegeben und weitere 5 min bei 60°C gemischt (Phosphorgehalt 2 %P). Als Vergleichsbeispiel 2 diente eine entsprechende Formulierung aber ohne DMP. Die Formulierungen wurden zur Härtung von 90°C mit 2°C pro min auf 110°C und dann für 1 h bei 130°C und 2 h bei 160°C erwärmt und anschließend 1 h bei 200°C getempert.

### Beispiel 3

Gehärtetes Epoxidharz aus DGEBA, DMDC und DMP wurde hergestellt wie in Beispiel 1 beschrieben, jedoch unter der Verwendung von 205 g DGEBA, 68,3 g DMDC und 26,6 g DMP (Phosphorgehalt 2,5 %P).

### Beispiel 4 und 5 und Vergleichsbeispiel 3

Gehärtetes Epoxidharz aus DGEBA und DMDC mit DEP statt DMP wurde hergestellt wie in Beispiel 1 beschrieben, und unter der Verwendung von 204,9 g DGEBA, 26,8 g DEP und 68,3 g DMDC (Phosphorgehalt 2,0 %P, Beispiel 4), bzw. unter der Verwendung von 204, 9 g DGEBA, 6,7 g DEP und 68,3 g DMDC (Phosphorgehalt 0,5 %P, Beispiel 5), bzw. unter der Verwendung von 204,9 g DGEBA, 40,1 g DEP und 68,3 g DMDC (Phosphorgehalt 3,0 %P, Vergleichsbeispiel 3),

### Vergleichsbeispiel 4

Gehärtetes Epoxidharz aus DGEBA, DMDC und Dimethylmethylphosphonat (DMMP; Aldrich) wurde hergestellt wie in Beispiel 1 beschrieben, jedoch unter der Verwendung von 207 g DGEBA, 69 g DMDC und 24 g DMMP (Phosphorgehalt: 2,0 %).

### Vergleichsbeispiel 5 und 6

Gehärtetes Epoxidharz aus DGEBA und Methylhexylhydrophthalsäureanhydrid (MHHPSA, ein Anhydrid-Härter ohne Aminogruppen; Duroplast-Chemie) mit DMP (Vergleichsbeispiel 5) wurde wie folgt hergestellt: 182 g DGEBA, 27 g DMP und 168 g MHHPSA wurden bei Raumtemperatur für 20 min gemischt. Danach wurden 3,5 g 1-Ethyl-3-methylimidazolium diethylphosphat (BASF SE) als Katalysator zugegeben und für weitere 5 min gemischt (Phosphorgehalt: 2,0 %P). In analoger Weise wurde die entsprechende Zusammensetzung jedoch ohne DMP hergestellt (Vergleichsbeispiel 6). Die Formulierung wurde für 3 h bei 100°C gehärtet. Anschließend wurden die Proben für 1 h bei 200°C getempert.

### Beispiele 6 bis 8 und Vergleichsbeispiele 7 und 8

Die Beispiele 6 bis 8 und die Vergleichsbeispiele 7 und 8 entsprechen den Beispielen 1, 3, 5 und den Vergleichsbeispielen 3 und 1 (in dieser Reihenfolge) jedoch ohne Durchführung des Temper-Schrittes.

### Beispiel 9

Die Glasübergangstemperatur T_{g} der Harzproben von Beispiel 1 bis 8 und von Vergleichsbeispiel 1 bis 8 wurde mittels Dynamisch-Mechanischer Analyse (DMA) bestimmt (ARES RDA III, Rheometrics Scientific). Dabei wurde ein rechteckiger Probekörper mit einer erzwungenen Frequenz und vorgegebener Deformation auf Torsion belastet (DIN EN ISO 6721), die Temperatur mit einer definierten Rampe gesteigert und Speicher- und Verlustmodul in festen Zeitintervallen aufgezeichnet. Ersterer stellt die Steifigkeit eines viskoelastischen Werkstoffs dar. Letzterer ist proportional zur im Material dissipierten Arbeit. Die Phasenverschiebung zwischen der dynamischen Spannung und der dynamischen Verformung wird durch den Phasenwinkel δ gekennzeichnet. Die Glasübergangstemperatur T_{g} wurde als Maximum der tan-δ-Kurve bestimmt. Die Ergebnisse sind in den Tabellen 1 und 2 zusammengefasst.

**Tab. 1: Beispiele und Vergleichsbeispiele mit Temperung des gehärteten Harzes**

| | Harz | Härter | Phosphonat | T_{g} (°C) |
|---|---|---|---|---|
| Bsp. 1 | DGEBA | DMDC | DMP (2 %P) | 204 |
| Vergl.-Bsp. 1 | DGEBA | DMDC | | 186 |
| Bsp. 2 | DGEBA | DICY | DMP (2 %P) | 154 |
| Vergl.-Bsp. 2 | DGEBA | DICY | | 139 |
| Bsp. 3 | DGEBA | DMDC | DMP (2,5 %P) | 192 |
| Bsp. 4 | DGEBA | DMDC | DEP (2 %P) | 206 |
| Bsp. 5 | DGEBA | DMDC | DEP (0,5 %P) | 208 |
| Vergl.-Bsp. 3 | DGEBA | DMDC | DEP (3 %P) | 185 |
| Vergl.-Bsp. 4 | DGEBA | DMDC | DMMP (2 %P) | 189 |
| Vergl.-Bsp. 5 | DGEBA | MHHPSA | DMP (2 %P) | 141 |
| Vergl.-Bsp. 6 | DGEBA | MHHPSA | | 163 |

**Tabelle 2: Beispiele ohne Temperung des gehärteten Harzes**

| | Harz | Härter | Phosphonat | Tg (°C) |
|---|---|---|---|---|
| Bsp. 6 | DGEBA | DMDC | DMP (2 %P) | 174 |
| Bsp. 7 | DGEBA | DMDC | DMP (2,5 %P) | 163 |
| Bsp. 8 | DGEBA | DMDC | DEP (0,5 %P) | 168 |
| Vergl.-Bsp. 7 | DGEBA | DMDC | DEP (3 %P) | 152 |
| Vergl.-Bsp. 8 | DGEBA | DMDC | | 171 |

### Beispiel 10:

Die flammhemmende Wirkung der Phosphonat-haltigen Harzproben von Beispiel 1, 3 und Vergleichsbeispiel 1 wurde untersucht gemäß der UL-94 Testvorschrift von Underwriters Laboratories (harmonisiert mit den Testvorschriften gemäß IEC 60707, 60695-11-10 und 60695-11-20 und ISO 9772 und 9773) für senkrechtes Verbrennen. Entsprechend dem Brennverhalten der Harzproben wurden sie den UL-94 Brennbarkeitsklassen V-0, V-1 oder V-2 zugeordnet, wobei V-0 die beste Flammschutzklasse repräsentiert. Die Ergebnisse sind in Tabelle 3 zusammengestellt. Die Angabe n.r. bedeutet, dass keine dieser Brennbarkeitsklassen zugeordnet werden konnte, der Flammschutz also schlechter ist.

**Tabelle 3: UL 94 Brennbarkeitsklassen**

| | Harz | Härter | Phosphonat | UL 94 |
|---|---|---|---|---|
| Bsp. 1 | DGEBA | DMDC | DMP (2 %P) | V-1 |
| Bsp. 7 | DGEBA | DMDC | DMP (2,5 %P) | V-0 |
| Vergl.-Bsp. 1 | DGEBA | DMDC | | n.r. |

### Beispiel 11:

Die Lagerstabilität der Prä-Formulierung aus DGEBA und DEP (273 g DGEBA und 36 g DEP, vermischt in einem Speedmixer™ DAC 150 FVZ der Firma Hausschild & Co. KG) bei Raumtemperatur wurde untersucht. Selbst nach 150 Tagen war die Mischung unverändert eine klare Flüssigkeit. Auch die NMR-Untersuchung der Mischung, direkt nach dem Vermischen und nach 150 Tagen, ergab keinen messbaren Unterschied.

## Patentansprüche

1. Härtbare Zusammensetzung umfassend eine oder mehrere Epoxidverbindungen mit 2 bis 10 Epoxidgruppen, einen oder mehrere Aminohärter mit mindestens einer primären oder mindestens zwei sekundären Aminogruppen und ein oder mehrere Phosphonate der Formel I 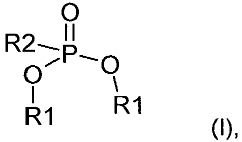 wobei
R1 unabhängig von einander Alkyl- oder Aryl-Gruppen oder substituierte Aryl-, Alkaryl- oder Alkenyl-Gruppen sind, und
R2 ein H-Atom ist, und
wobei der Anteil der Phosphonate der Formel I 2,5 Gew.-% Phosphor bezogen auf die gesamte Zusammensetzung nicht überschreitet_und mindestens 0,2 Gew-% Phosphor bezogen auf die gesamte Zusammensetzung beträgt, und
wobei die Alkyl-Gruppen1 bis 20 C-Atome besitzen und keine Substituenten mit Heteroatomen aufweisen.

2. Die härtbare Zusammensetzung gemäß Anspruch 1, wobei die Reste R1 der Formel I unabhängig voneinander Alkyl-Gruppen mit 1 bis 5 C-Atomen ohne Heteroatome sind oder zusammen einen gemeinsamen Alkylen-verbrückenden Rest mit 2 bis 10 C-Atome ohne Heteroatome bilden.

3. Die härtbare Zusammensetzung gemäß Anspruch 1, wobei die Reste R1 der Formel I unabhängig voneinander Alkyl-Gruppen mit 1 bis 3 C-Atomen ohne Heteroatome sind oder zusammen einen gemeinsamen Alkylen-verbrückenden Rest mit 2 bis 6 C-Atome ohne Heteroatome bilden.

4. Die härtbare Zusammensetzung gemäß Anspruch 1, wobei die Reste R1 der Formel I unabhängig voneinander Alkyl-Gruppen mit 1 bis 3 C-Atomen ohne Heteroatome sind.

5. Verfahren zur Herstellung von gehärtetem Epoxidharz, **dadurch gekennzeichnet, dass** die härtbare Zusammensetzung gemäß einem der Ansprüche 1 bis 4 gehärtet wird.

6. Das Verfahren zur Herstellung von gehärtetem Epoxidharz gemäß Anspruch 5, wobei die Härtung bei einer Temperatur von 40 bis 210 °C erfolgt.

7. Das Verfahren zur Herstellung von gehärtetem Epoxidharz gemäß Anspruch 5 oder 6, wobei die härtbare Zusammensetzung während oder nach der Härtung einer thermischen Nachbehandlung ausgesetzt wird.

8. Das Verfahren zur Herstellung von gehärtetem Epoxidharz gemäß Anspruch 7, wobei die thermische Nachbehandlung bei einer Temperatur von 150 bis 250 °C erfolgt.

9. Gehärtetes Epoxidharz erhältlich durch das Verfahren gemäß einem der Ansprüche 5 bis 8.

10. Formkörper aus dem gehärteten Epoxidharz gemäß Anspruch 9.

11. Verwendung von Phosphonat der Formel I, wie definiert in einem der Ansprüche 1 bis 4, als Zusatz zu Mischungen aus Epoxidverbindungen und Aminohärtern zur Erhöhung der Glasübergangstemperatur für das gehärtete Epoxidharz daraus, wobei der Anteil der Phosphonate der Formel I 2,5 Gew.-% Phosphor bezogen auf die gesamte Zusammensetzung nicht überschreitet und mindestens 0,2 Gew-% Phosphor bezogen auf die gesamte Zusammensetzung beträgt.

## Claims

1. A curable composition comprising one or more epoxy compounds having from 2 to 10 epoxy groups, one or more amino hardeners having at least one primary or at least two secondary amino groups, and one or more phosphonates of the formula I 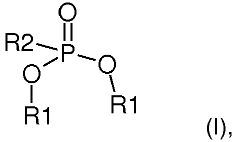 where
R1 are mutually independently alkyl or aryl groups or substituted aryl, alkaryl, or alkenyl groups, and
R2 is an H atom, and
where the proportion of the phosphonates of the formula I does not exceed 2.5% by weight of phosphorus, based on the entire composition, and is at least 0.2% by weight of phosphorus, based on the entire composition, and
where the alkyl groups have from 1 to 20 carbon atoms and have no substituents having heteroatoms.

2. The curable composition according to claim 1, where the moieties R1 of the formula I are mutually independently alkyl groups having from 1 to 5 carbon atoms and having no heteroatoms, or join together to form an alkylene bridging moiety having from 2 to 10 carbon atoms and having no heteroatoms.

3. The curable composition according to claim 1, where the moieties R1 of the formula I are mutually independently alkyl groups having from 1 to 3 carbon atoms and having no heteroatoms, or join together to form an alkylene bridging moiety having from 2 to 6 carbon atoms and having no heteroatoms.

4. The curable composition according to claim 1, where the moieties R1 of the formula I are mutually independently alkyl groups having from 1 to 3 carbon atoms and having no heteroatoms.

5. A process for producing cured epoxy resin, which comprises curing the curable composition according to any of claims 1 to 4.

6. The process for producing cured epoxy resin according to claim 5, where the curing takes place at a temperature of from 40 to 210°C.

7. The process for producing cured epoxy resin according to claim 5 or 6, where the curable composition is exposed to a thermal posttreatment during or subsequently to the curing.

8. The process for producing cured epoxy resin according to claim 7, where the thermal posttreatment takes place at a temperature of from 150 to 250°C.

9. A cured epoxy resin that can be obtained by the process according to any of claims 5 to 8.

10. A molding made of the cured epoxy resin according to claim 9.

11. The use of phosponate of the formula I, as defined in any of claims 1 to 4, as addition to mixtures made of epoxy compounds and of amino hardeners in order to increase the glass transition temperature for the resultant cured epoxy resin, where the proportion of the phosphonates of the formula I does not exceed 2.5% by weight of phosphorus, based on the entire composition, and is at least 0.2% by weight of phosphorus, based on the entire composition.

## Revendications

1. Composition durcissable comprenant un ou plusieurs composés époxy comportant de 2 à 10 groupes époxyde, un ou plusieurs durcisseurs amino comportant au moins un groupe amino primaire ou au moins deux groupes amino secondaires, et un ou plusieurs phosphonates de formule I 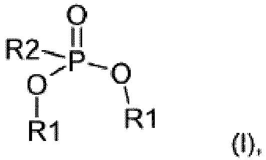 dans laquelle
R1 représentent indépendamment l'un de l'autre des groupes alkyle ou aryle ou des groupes aryle, alkaryle ou alcényle substitués, et
R2 est un atome d'hydrogène, et
la proportion des phosphonates de formule I n'excédant pas 2,5 % en poids de phosphore par rapport à la composition totale et valant au moins 0,2 % en poids de phosphore par rapport à la composition totale, et
les groupes alkyle ayant de 1 à 20 atomes de carbone et ne portant pas de substituants comportant des hétéroatomes.

2. Composition durcissable selon la revendication 1, dans laquelle les radicaux R1 de formule I représentent indépendamment l'un de l'autre des groupes alkyle ayant de 1 à 5 atomes de carbone, sans hétéroatomes, ou forment ensemble un radical pontant alkylène commun ayant de 2 à 10 atomes de carbone sans hétéroatomes.

3. Composition durcissable selon la revendication 1, dans laquelle les radicaux R1 de formule I représentent indépendamment l'un de l'autre des groupes alkyle ayant de 1 à 3 atomes de carbone, sans hétéroatomes, ou forment ensemble un radical pontant alkylène commun ayant de 2 à 6 atomes de carbone sans hétéroatomes.

4. Composition durcissable selon la revendication 1, dans laquelle les radicaux R1 de formule I représentent indépendamment l'un de l'autre des groupes alkyle ayant de 1 à 3 atomes de carbone sans hétéroatomes.

5. Procédé pour la production de résine époxy durcie, **caractérisé en ce qu'**on fait durcir la composition durcissable selon l'une quelconque des revendications 1 à 4.

6. Procédé pour la production de résine époxy durcie selon la revendication 5, dans lequel le durcissement s'effectue à une température de 40 à 210 °C.

7. Procédé pour la production de résine époxy durcie selon la revendication 5 ou 6, dans lequel on expose la composition durcissable, pendant ou après le durcissement, à un post-traitement thermique.

8. Procédé pour la production de résine époxy durcie selon la revendication 7, dans lequel le post-traitement thermique s'effectue à une température de 150 à 250 °C.

9. Résine époxy durcie pouvant être obtenue par le procédé selon l'une quelconque des revendications 5 à 8.

10. Corps moulé à base de la résine époxy selon la revendication 9.

11. Utilisation de phosphonate de formule I, tel que défini dans l'une quelconque des revendications 1 à 4, comme additif à des mélanges de composés époxy et de durcisseurs amino, pour l'élévation de la température de transition vitreuse de la résine époxy durcie, dans laquelle la proportion des phosphonates de formule I n'excède pas 2,5 % en poids de phosphore par rapport à la composition totale et vaut au moins 0,2 % en poids de phosphore par rapport à la composition totale.
